# EUROPEAN PATENT APPLICATION

(11) **EP 4 178 066 A1**
(43) Date of publication of application: **10.05.2023**
(21) Application number: 21206505.6
(22) Date of filing: 04.11.2021
(51) Int. Cl.: H02J 7/00

(54) **ACTIVE BALANCING CIRCUIT FOR ELECTROCHEMICAL ENERGY STORAGE SYSTEMS**

(71) Applicant: Nawatechnologies, 13100 Aix-En-Provence (FR)
(72) Inventor: TOMMASI, Michele, 83140 Six-Fours (FR)
(74) Representative: Schmidt, Martin Peter

(57) **Abstract**

An active balancing method and circuit for energy storage systems based on series connected rechargeable battery and/or supercapacitor cells, where all the energy storage cells are connected via synchronously switched balancing circuits to a common AC balancing energy transfer bus; the balancing circuits automatically draw energy from cells with higher voltage than average, transport this energy via the common AC balancing energy transfer bus, and delivers it to cells with lower than average voltage. Once the cells are balanced, no energy transfers take place.

## Description

### Technical field of the invention

The invention generally relates to storage systems for electrical energy, and more precisely to electrochemical energy storage systems based on electrical energy storage cells such as batteries and/or capacitors. It relates in particular to battery management systems, and more precisely to an active balancing system for rechargeable battery and/or capacitor cells connected in series, where the energy storage cells can be balanced by transferring energy to or from them by means of a common AC energy transfer bus.

### Prior art

Many modern devices, ranging from small mobile phones or loT (Internet of Things) connected appliances to large devices like electric or hybrid vehicles, use an energy storage system consisting of a series combinations of rechargeable battery cells and/or supercapacitor cells (more generally referred to here as energy storage cells or electrical energy storage cells). The series connection is required because each energy storage cell typically has a low nominal voltage under 4 V, but the appliance or device requires a higher voltage than what a single cell can provide. These energy storage cells are ideally matched in capacity or capacitance as well as in leakage current and in internal resistance, but in practice there is some variation in these parameters. For example, supercapacitor capacitance is often rated with tolerances of several tens of percentage points (usually not less than 20 %). Furthermore, mismatches can occur due to aging or uneven temperatures.

These mismatches can cause some energy storage cells to have significantly higher or lower voltage values than others. In this case, when charging, weaker energy storage cells may reach their maximum safe voltage before others, making full charging impossible without exceeding the maximum ratings, risking damage such as leaks, fires, explosions or varying degrees of degraded performance. Similarly, when discharging, weaker cells may reach their minimum safe level, with similar potential damage.

To avoid the potential damage from unbalanced energy storage cells, battery or supercapacitor management systems typically include a balancing circuit to correct the unbalance of abnormally strong or weak energy storage cells.

A large number of different balancing circuits for series-connected electrical energy units have been described in prior art. These circuits can be active circuits or passive circuits. Passive cell balancing methods use dissipative bypass routes; these circuits can be very simple, but energy is lost. Active cell balancing methods use external circuits, which may be switching circuits or shared transformers. A short summary of these two approaches is given in the paper *"*An Energy Converter Method for Battery Cell Balancing" by D.V. Cadar et al, Proc. IEEE 33rd Int. Spring Seminar on Electronics Technology, p. 290-293 (2010).

Several balancing circuits known in prior art yield a rectified DC current. As an example, US 9,368,977 (assigned to Cheng Kung University) discloses a multiwinding transformer balancer with flybacks, yielding a rectified direct current. US 9,209,630 (assigned to Ford) discloses a system based on a synchronous rectified transformer. US 9,142,979 (Tsai) discloses a system using synchronous flybacks with rectification. US 9,148,029 (Tsai) discloses a system comprising multiple transformers providing rectified feeding to a set of battery units. US 8,294,421 (assigned to O2Micro) discloses a balancing system using transformers and rectification. US 8,786,255 (assigned to Infineon Technologies) disclose a charge balancing circuit using switched paths to combine single transformers to battery terminals with rectification.

Several other systems have been described. US 9,831,689 (assigned to Postech) discloses a LC resonant switched cell connected by switches to selected cells of a matrix. US 9,496,724 (assigned to ST Microelectronics) discloses switching an inductor between cells in a flyback manner. This circuit uses a large matrix of switches, but no transformer. US 10,063,070 (assigned to NIST) discloses a system comprising a buck converter switched to individual cells and other side feeding and a battery for external DC supply. US 9,484,754 (assigned to Balanstring Technology) discloses a system using a multiwinding inductor with various drivers; this system is based on flyback operation between selected cells. US 8,837,170 (assigned to Busek) discloses a converter system in which a common core transformer is driven by push pull current transformer using a common inductor.

US 9,444,271 (assigned to Green Solutions Technology) discloses a system comprising a set of batteries, in which battery balancing is inhibited if the battery is not within useful voltage range. US 9,774,206 (assigned to Linear Technology Corp.) discloses a monitoring device in which the open cell voltage is calculated for each battery, and balancing is carried out according to that voltage. US 9,153,973 (Nalbant) discloses a battery cell balancing system in which several cells with full bridge switching circuits are driving a multi-winding transformer.

US 10,374,440 (assigned to Rockwell Collins) claims a supercapacitor system in which switches forming a half bridge feed transformers and a DC common bus. The specification does not mention that said common bus is a DC common bus, and the figures and explanation given in the specification rather suggest that the common bus is an AC common bus.

Balancing circuits can be passive, in which case any excess of energy in the stronger cells is dissipated as heat in resistors and/or through constant current sinks or other dissipative devices.

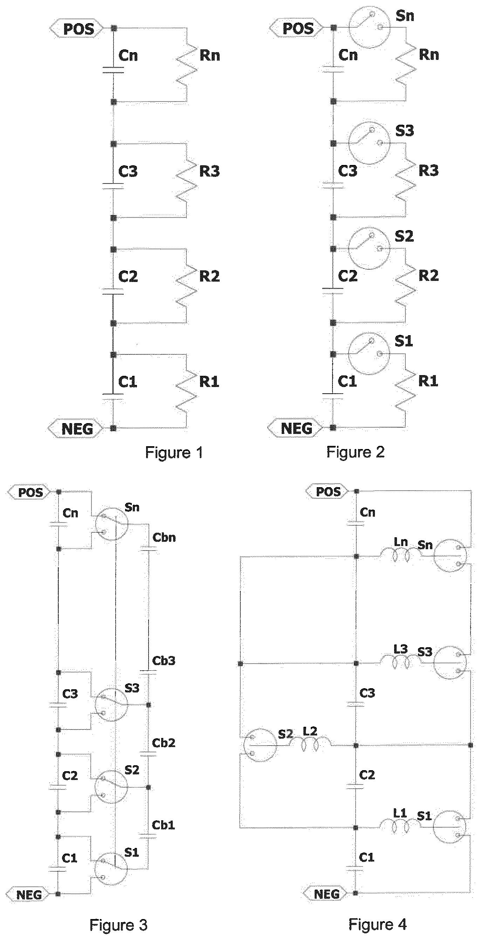

A review of various active and passive balancing circuits has been given in the publication *"*A Review of passive and Active Battery Balancing based on ATLAB/Simulink" by M. Daowd et al., published in International Review of Electrical Engineering (I.R.E.E.) vol 6(7), p. 2974-2989 (November 2011). The following figures 1 to 8 show electrical schematic diagrams of typical prior art embodiments disclosed in this paper.
Figure 1 shows a typical simple passive balancer consisting of resistors; this is rather inefficient, because it causes a constant leakage of energy, regardless of whether there is any imbalance or not.
Figure 2 shows a typical passive balancer, very commonly used in lithium battery management systems (BMS), wherein switches activate an energy storage cell's resistor only when required; a very common simple strategy is to activate the resistors for energy storage cells that are close to their maximum safe voltage, while in more complex systems the activation may happen when an energy storage cell has been found to be weak and thus shows a higher voltage than the average of all other energy storage cells. Such circuits are better than the simple resistive balancer; nevertheless, they involve dissipating excess energy; in the case of the simpler strategy of detecting proximity to maximum voltage, balancing only happens when the energy storage cells are almost fully charged, so this strategy only works for systems where the energy storage cells remain for long periods at full charge, such as standby power supplies. Furthermore, this technique requires precise synchronous acquisition of all cell voltages even under high current charging or discharging, and an estimation of the open circuit cell voltage under no load.
   To avoid dissipating energy, it is preferable to use an active balancer, where energy is transferred efficiently between cells with minimal dissipation.
Figure 3 shows a typical switched capacitor active balancer; each capacitor is alternately switched between adjacent energy storage cells. By doing this repeatedly and continuously for all energy storage cells, local imbalances between adjacent energy storage cells are evened out, and this balancing effect is propagated to the next balancing capacitor and so on, till eventually the effect propagates across all energy storage cells in the series; however, this propagation involves many steps, making this propagation inefficient and slow. The capacitors in this active balancer can be subjected to strong current peaks, because of the repeated parallel recombination of unbalanced voltage sources.
Figure 4 shows a typical switched inductor active balancer; inductors are alternately switched between adjacent energy storage cells; by adjusting the duty cycle of the switching of each inductor, a current flow can be initiated in one direction or the other, allowing sophisticated balancing strategies. Again, the propagation of excess energy transfers across the series of energy storage cells can be slow and inefficient.
   In prior art balancers that act between adjacent cells, such as in figures 2 and 3, if the unbalanced cells are far from each other, the propagation time of the balancing current will be very long, and the efficiency of balancing between distant cells will be low - even with an almost perfect 98% efficient balancer on 30 cells, the efficiency of transfer between the two farthest cells will be about 55%.

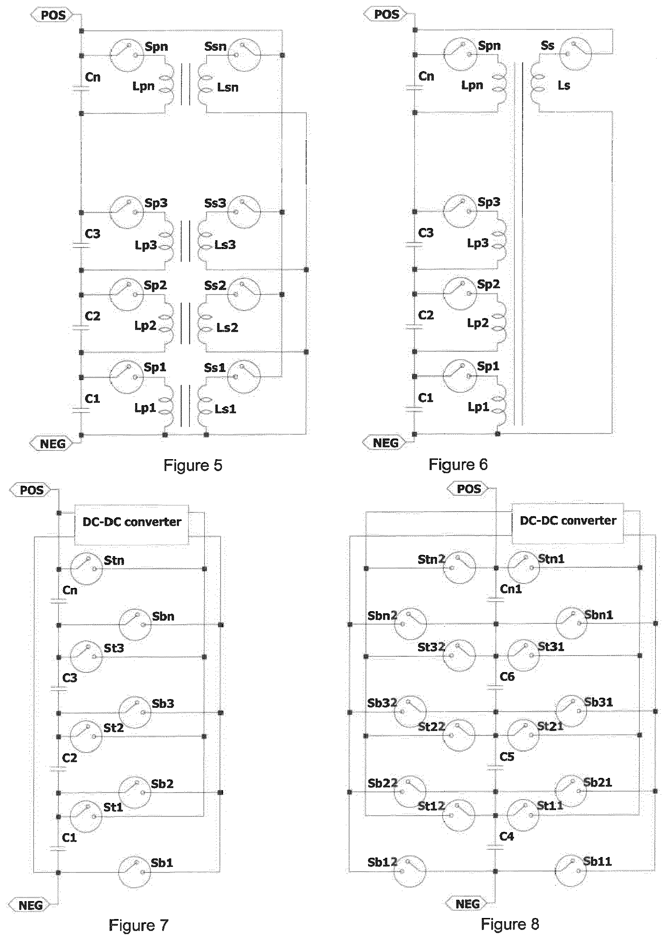

Figure 5 shows a typical active balancer, whereby each cell is equipped with an individually controlled isolated DC-DC converter, often a flyback converter as shown, with the ability to transfer energy away from the cell, dumping that energy onto the end terminals of the series connected assembly of battery or supercapacitor cells, thus transferring the excess energy to all the energy storage cells in equal measure. This requires complex control, with the detection of the open circuit voltage of each energy storage cell, the determination of which ones have excess voltage, and the activation of the corresponding DC-DC converters.
Figure 6 shows a typical active balancer where several DC-DC converters' transformers are combined into one by sharing a common multi-winding transformer, thus having several primaries and one secondary winding; such a circuit can be more economical, but is less modular, and still requires the aforementioned complex control strategy.
Figure 7 shows a typical active balancer, with switches to select an unbalanced cell to be equalized and connect it to a DC-DC converter to dump energy onto the full stack of series connected cells. Each cell is equipped with a set of switches Stᵢ/Sbᵢ selecting which cell must be connected to a DC-DC converter, in order to transfer energy away from that cell, dumping that energy onto the end terminals of the series connected assembly of battery or supercapacitor cells. This requires a dense network of switches able to withstand the voltage of the entire stack of cells.
Figure 8 shows a typical active balancer with switches to allow a DC-DC converter to take energy away from a selected high voltage cell and transfer energy to a selected low voltage cell. Each cell is equipped with two sets of switches Stᵢ₁/Sbᵢ₁ and Stᵢ₂/Sbᵢ₂ selecting a pair of cells that will be connected to a DC-DC converter, in order to transfer energy away from one cell, the higher voltage one, dumping that energy onto the other cell, the lower voltage one. This requires a dense network of switches able to withstand the voltage of the entire stack of cells.

The present invention tries to overcome at least some of the shortcomings of these prior art systems and circuits, by providing a direct high efficiency low loss energy path between unbalanced cells and by eliminating the need for a complex control system while ensuring a good modularity and low component count.

### Summary of the invention

According to the invention the problem is solved by a system comprising a balancer circuit for N electrical energy storage cells Cᵢ, said balancer circuit comprising N cell balancing circuits, wherein N is an integer greater than 1, wherein each of said cell balancing circuits comprises a plurality of switches driven by a common synchronisation clock bus used to synchronize the switching of said switches, and driving said switches symmetrically and in a non-overlapping way at a given frequency which is typically comprised between 20 kHz and 1000 kHz, and wherein each cell balancing circuit i comprises a set of two switches S, namely a top switch Stᵢ and a bottom switch Sbᵢ in a half bridge configuration,
said half-bridge of switches having the upper node connected to the positive terminal of an energy storage cell Cᵢ, and the lower node connected to the negative terminal of the primary winding Lpᵢ of a high frequency transformer Tᵢ,
and wherein each cell balancing circuit i comprises a set of two capacitors C, namely a top capacitor Ctᵢ and a bottom capacitor Cbᵢ in a half bridge configuration, said half bridge of capacitors having the upper node connected to the positive terminal of an energy storage cell Cᵢ, and the lower node connected to the negative terminal of said energy storage cell, and having the switched node connected to the other terminal of the primary winding Lpᵢ of said high frequency transformer Tᵢ,
said high frequency transformer Tᵢ having its secondary winding Lsᵢ connected to a common two-wire AC balancing energy transfer bus, used for energy transfers between balancing circuits,
knowing that i is an integer with 1 < i ≤ N,
and wherein each cell balancing circuit, driven synchronously with other cell balancing circuits in the system, can transfer energy from said energy storage cell to the AC energy transfer bus or vice versa, respectively according to whether said energy storage cell is at a voltage higher or lower than other energy storage cells.

This system represents a first object of the present invention.

Said electrical energy storage cells can be capacitors or supercapacitors, and/or can be batteries, such as lithium ion batteries.

Advantageously, each of the N cell balancing circuits can be activated or deactivated, according to whether the corresponding energy cell is unbalanced or balanced.

In a variant, only one of the two capacitors Ctᵢ and Cbᵢ is present.

In an embodiment of the invention, said cell balancing circuit further comprises current limiting resistors in series with the primary winding Lpᵢ and/or the secondary windings Lsᵢ of the high frequency transformers and/or with the switches S.

In another embodiment of the invention, said half bridge of capacitors Ctᵢ and Cbᵢ is replaced by a half bridge of switches St2ᵢ and Sb2ᵢ, thus forming a full-bridge of switches, and optionally having a DC bypass capacitor in series with the primary winding Lpi.

In another embodiment of the invention, said high frequency transformers Tᵢ are replaced by a single transformer with i primary windings Lpᵢ, and not having any secondary windings Lsᵢ, where the common transformer magnetic core couples all the primary windings together and thus acts as a magnetic AC balancing energy transfer bus, thus replacing the two-wire AC balancing energy transfer bus.

In another embodiment of the invention, each cell balancing circuit further comprises a low pass filter, typically comprising an inductance Lfᵢ or a resistor Rfᵢ, and a capacitor Cfᵢ, said filter being inserted between each energy storage cell Cᵢ, and its corresponding cell balancing circuit i.

In an advantageous embodiment each cell balancing circuit comprises a set of one or two DC bypass capacitors C, namely a top cell Ctᵢ and/or a bottom cell Cbᵢ, in a half bridge configuration when both are present. This simplifies the structure of the system.

In another embodiment which can be combined with the previous embodiment, said top switch Stᵢ and said bottom switch Sbᵢ are in a half bridge configuration. This is a particularly simple and inexpensive embodiment because it minimises the number of switches in the system.

In other specific embodiments, each cell balancing circuit can further comprise a low pass LC filter, preferably comprising a coil Lfᵢ and a cell Cfᵢ connected in series.

In another embodiment, the N cell balancing circuits can be connected or disconnected independently to the clock and synchronization bus, under the control of a supervising control system, in order to activate only the cell balancing circuits of the energy storage cells that need balancing.

These different embodiments can be combined with each other, and with other embodiments described herein.

Said electrical energy storage cells can be any type of storage cell including capacitors, ultracapacitors or supercapacitors or hybrid supercapacitors or batteries including rechargeable batteries and including lithium batteries. Hybrid supercapacitors are devices that have two different types of electrodes, the anode being typically capable of inserting cations (typically lithium), while the cathode being capable of adsorbing the counter anion. Vertically aligned carbon nanotubes (VACNT) can be used as a cathode material. Alternatively, said storage cells can be batteries, in particular secondary (i.e. rechargeable) batteries; lithium ion batteries can be used, in particular as secondary batteries.

Figures 9 to 11 show electrical schematic diagrams of embodiments according to the present invention.

Figure 9 shows the electrical schematic diagram of a first embodiment using a high frequency transformer for each balancer; this is a preferred embodiment of the invention.

Figure 10 shows the electrical schematic diagram of a second embodiment using a common transformer core for all primary windings.

Figure 11 shows the electrical schematic diagram of an embodiment with a single transformer with multiple windings Lpᵢ.

Another object of the present invention is an electrical power unit for use with an electric device, comprising at least one system according to the invention.

In particular, said electric power unit can be designed and configured to be powered by a set of battery cells that is inserted into said electrical device and that is capable to make an electrical current flow through a first set of electric contacts connected to a second set of electric contacts, wherein said first set of electric contacts is located on said set of battery cells and said second set of electric contacts is located on said electrical device. Said electrical power unit according to the invention is characterized in that it comprises a system according to the invention mounted in a housing that is insertable into said electric device in lieu and place of said set of battery cells, wherein a first set of electric contacts connectable to said second set of electric contacts is fixed to said housing, so that said electrical power unit is able to power said electric device.

The system according to the invention or the electrical power unit according to the invention can be designed to replace a set of batteries or a battery pack in a battery-powered electric device, and can in particular be designed to replace a set of lithium ion secondary batteries. For this use it advantageously comprises electrical energy storage cells that are capacitors, and advantageously supercapacitors. Another object of the invention is therefore the use of a system according to the invention to replace a battery pack in a battery-powered electric device.

### Detailed description of preferred embodiments

The present invention can be carried out with electrical energy storage cells of any kind, such as capacitors and batteries. In particular, it can be carried out with capacitors of any kind, including polarized capacitors such as electrolytic capacitors. In particular, it can be carried out with tantalum capacitors (solid capacitors or wet capacitors), ceramic capacitors, supercapacitors, hybrid supercapacitors. The use of supercapacitors or ultracapacitors in the system according to the invention represents a preferred embodiment of the present invention. The term "capacitor" is used here as a designation of all these capacitors.

The invention can also be carried out with battery cells, such as lithium batteries, and preferably with secondary (i.e. rechargeable) batteries. The term "battery cell" is used here as a designation of all these batteries.

In an energy storage system comprising electrical energy storage cells such as capacitors or battery cells in series, said electrical energy storage cells Ci are connected between a negative (input) voltage node Xneg and a positive voltage node Xpos. A charging voltage is supplied to the electrical energy storage cells Ci by a charger power supply between node Xneg and Xpos.

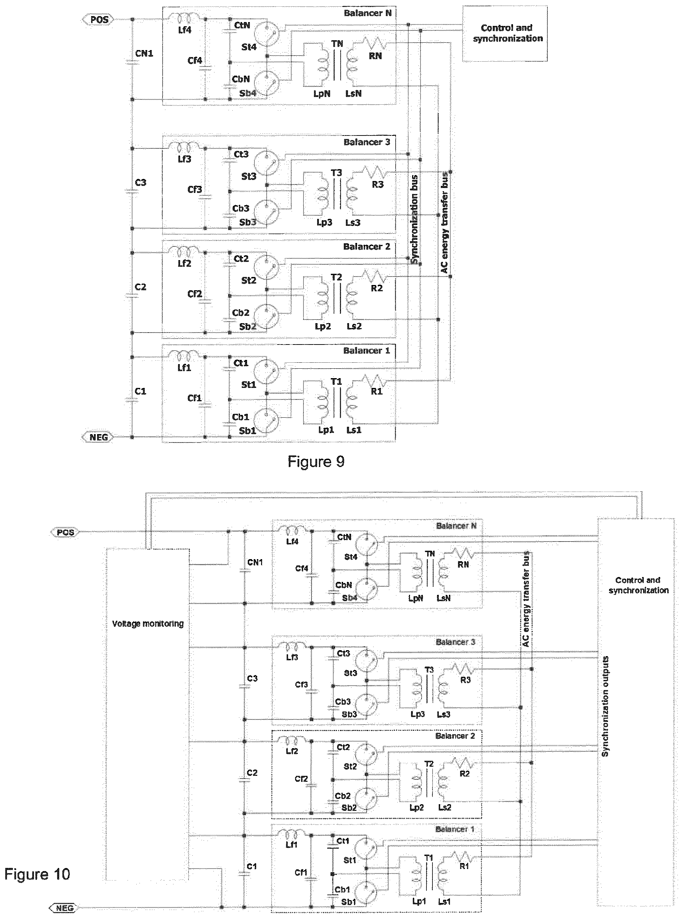

Each electrical energy storage cell, such as a capacitor or a battery cell, is fitted with a balancer circuit as shown in Figure 9. On this figure the electrical energy storage cells are capacitors, but this circuit will also work with other types of electrical energy storage cells. In the embodiment shown on figure 9, the balancing circuits are also connected to a common AC balancing energy transfer bus, used for energy transfers between balancers, and a common synchronization bus, used to synchronize the switching of the internal components of the balancer.

Each cell balancer consists in an optional input low pass LC filter Lfᵢ Cfᵢ, a set of two switches Stᵢ and Sbᵢ (top and bottom), typically MOSFETs, in a half bridge configuration, a set of two electrical energy storage cells Ctᵢ and Cbᵢ (top and bottom) also in a half bridge configuration, a high frequency transformer Tᵢ and a current limiting resistor Rᵢ.

In addition to the components above, optionally a resonant capacitor keeps harmonics low and ensures smooth soft-switching operation (the switches never turn on hard; thanks to the leakage inductance of the transformer, when one releases one switch, the voltage swings on its own to the other rail, and only then does the other switch turn on, at zero voltage).

All the transformer secondary windings are tied to a common AC balancing energy transfer bus through a current limiting resistor; these limiting resistors can also be used to monitor the current contribution of each cell to the AC energy transfer bus. The current limiting resistor may also be placed on the primary windings or anywhere in the circuit where they can function as current limiters. They may also be replaced by other current limiting devices.

The balancer circuits are all clocked synchronously at a fixed frequency with no phase difference between balancers; a synchronization bus is used to make sure all balancers are driven with the same signal. In the case of MOSFET switches, the frequency is typically in the range 20 kHz to 500 kHz.

Each balancer tries to impress onto the AC energy transfer bus a square wave of amplitude equal to the associated supercapacitor or battery cell voltage.

The higher voltage cells will try to impart onto the AC energy transfer bus an AC voltage higher than the average of all other cells, transferring energy to the bus and discharging said higher voltage cells.

The lower voltage cells will try to impart onto the AC energy transfer bus an AC voltage lower than the average of all other cells, transferring energy away from the bus and charging said lower voltage cells.

There is no need to measure or monitor cells and decide which balancer units to turn on; balanced cells, i.e. cells whose voltage is close to the average of all cell voltages, will not be charged or discharged, and only cells that have higher or lower than average voltage will be discharged or charged respectively. The balancing current is proportional to the voltage difference between cells and depends on internal circuit resistances and the limiting resistor value.

To save power, when the balancing currents are detected as being low, or when the cell voltages are detected as being balanced, the entire circuit consisting of all balancers can be optionally turned off into standby mode and turned on periodically to check for unbalance.

The system according to the invention is simple, and its cost is low.

In another embodiment of the balancer, as shown in Figure 10 the cell balancer units corresponding to balanced cells, as detected by a voltage monitoring data acquisition system, can be turned off, thus activating only those balancer units that are needed to correct the cell voltages according to a complex balancing strategy. This allows transferring energy directly between any subset of all the energy cells that is unbalanced because the voltage is too high, to any subset of all the energy cells that is unbalanced because the voltage is too low. The extra control circuitry with the ability to enable or disable the clock and synchronization drive on a cell-by-cell basis, activating only the balancers on cells that need balancing, if any, allows reducing power consumption, particularly when most or all the cells are balanced. The ability to create low loss direct energy transfers between re-definable groups of cells allows the development of efficient balancing strategies. Said strategies will be efficient even in the case of large systems with a large number of cells.

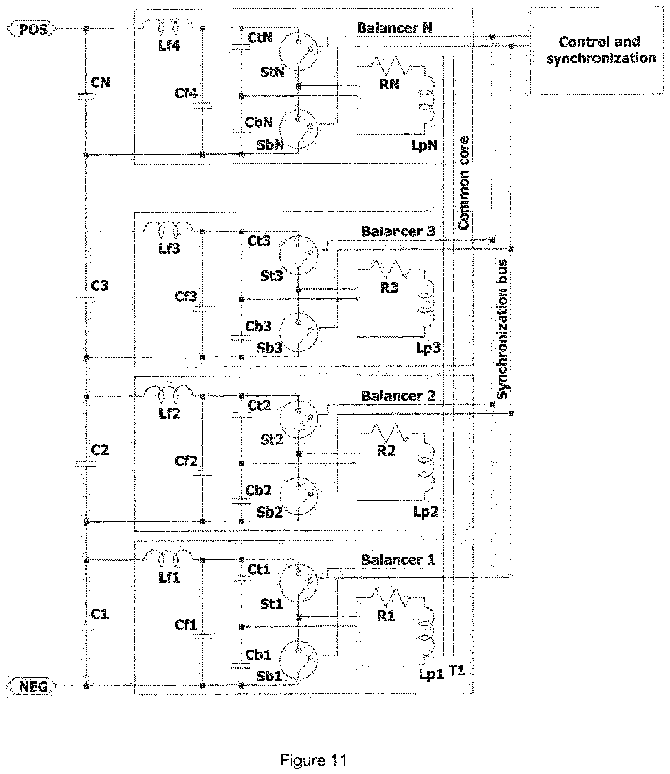

Other embodiments of the balancer may use a single transformer with multiple windings Lpᵢ, as shown in Figure 11. Instead of using separate transformers with the secondary windings connected to a common AC bus, here the coupling between balancers is magnetic: a common transformer core couples all the primary windings together. The disadvantage is the loss of modularity, but there can be cost advantages in smaller systems using few energy storage cells. The behavior of this single-transformer balancer is very similar to the multi-transformer balancer.

The balancer shown in figure 11 can also feature, like the circuit in figure 10, extra control circuitry with the ability to enable or disable the clock and synchronization drive on a cell-by-cell basis, thus reducing power consumption, particularly when the cells are balanced.

As in Figure 9, the electrical energy storage cells shown on figure 10 are capacitors, but this circuit will also work with other types of electrical energy storage cells, such as batteries. Said batteries are advantageously secondary batteries. In particular, lithium ion batteries can be used.

In other embodiments of the balancer there may be a single DC bypass capacitor Ctᵢ or Cbᵢ.

Other embodiments of the balancer may have a full bridge of four switches driving the transformers, with or without a DC bypass capacitor.

Other embodiments of the balancer may have the switches in a push pull center tap configuration driving the transformers; in this case, the electrical energy storage cell Ctᵢ and Cbᵢ are not present.

Other embodiments of the balancer may have other topologies or arrangements of switches equally capable of driving a square wave into the primaries of the transformers. Other embodiments of the balancer may omit the low pass filters on the balancers or replace them with other types of filters.

Other embodiments of the balancer may use other types of switches instead of MOSFETs, such as GaN transistors, SiC transistors, IGBTs, BJTs, relays and any other type of switch know to those skilled on the art.

In the present balancer, transfers are direct "cell to cell" at any distance and do not depend on a slower cascading effect between adjacent cells, with strong advantages in balancing speed and efficiency.

The present invention has many advantages over prior art embodiments, and only a few will be mentioned here.

In prior art balancers that work by direct transfer of energy from higher voltage supercapacitor or battery cells to the entire series stack of supercapacitors or batteries, said balancers rely on a DC energy transfer bus, and thus require rectification.

In the present balancer, energy transfers are done on an AC bus, thus removing the cost, complexity and power losses of DC rectifiers.

In prior art balancers that work by direct transfer of energy from higher voltage supercapacitor or battery cells to lower voltage supercapacitor or battery cells, said balancers require a complex control system to identify the higher and lower voltage cells, and then switch a matrix of high voltage switches to select the cells to be balanced and connect via a bidirectional DC-DC converter.

In the present balancer, measuring and identifying the unbalanced cells is optional, since the higher voltage cells will automatically impose a higher AC voltage on the AC energy transfer bus, and the lower voltage cells will automatically be seen as a load by the AC energy transfer bus, initiating energy transfer with no further control operations required.

The system according to the present invention can be used in energy storage systems for various sizes and applications including fixed and mobile application including cordless tools, electric and/or hybrid vehicles, loT devices, and including hybrid energy storage systems combining two or more types of energy storage cells, including batteries, fuel cells and supercapacitor.

In particular, the system according to the present invention can be used in an electrical power unit for use with an electric device designed to be powered by a set of secondary batteries that is inserted into said electric device and that is capable to make an electrical current flow through a first set of electric contacts connected to a second set of electric contacts, wherein said first set of electric contacts is located on said set of batteries and said second set of electric contacts is located on said electric device. More precisely, said electrical power unit, characterized in that it comprises a system according to any of the embodiments of the present invention, can be mounted in a housing that is insertable into said electric device in lieu and place of said set of secondary batteries, wherein a first set of electric contacts connectable to said second set of electric contacts is fixed to said housing, so that said electrical power unit is able to power said electric device.

As there is no advantage to replace a set of lithium ion secondary batteries (such sets of rechargeable batteries are also called a "battery pack") by a system according to the invention using lithium ion secondary batteries, the electrical energy storage cells used in the electrical power pack according to the invention are (super)capacitors.

Such electrical power units can be manufactured with housings of different size and shape, that can be plugged into electrical devices in lieu and place of battery packs. Said first set of electric contacts fixed to said housing must be in a location that allows to establish an electric connection with said second set of electric contacts located on said electric device. Such electrical power units can also be manufactured with different nominal voltages, so as to be able to replace battery packs in said electric devices.

The system according to the invention, as well as the electrical power unit according to the invention, can be manufactured with various output voltages and capacities, as required by the electric device which it is intended to power. In particular, the electrical power unit can be manufactured as a plug-in pack capable to directly replace a battery pack in a battery-powered device, having both an appropriate output voltage and capacity, and an appropriate" shape and size. Such electric devices can be electric, cordless tools which require the supply of a rather high electrical power over a rather short period of time, such as screwdrivers, drills, circular saws, jigsaws, reciprocating saws, mitre saws, grinders, impact drivers, impact wrenches, nailers, staplers, planers, sanders, or hammers.

## Claims

1. System comprising a balancer circuit for N electrical energy storage cells Cᵢ, said balancer circuit comprising N cell balancing circuits, where N is an integer greater than 1, wherein each of said cell balancing circuits comprises a plurality of switches driven by a common synchronisation clock bus used to synchronize the switching of said switches, and driving said switches symmetrically and in a non-overlapping way at a given frequency,
- and wherein each cell balancing circuit i comprises a set of two switches S, namely a top switch Stᵢ and a bottom switch Sbᵢ in a half bridge configuration,
- said half-bridge of switches having the upper node connected to the positive terminal of an energy storage cell Cᵢ, and the lower node connected to the negative terminal of said energy storage cell, and having the switched node connected to one terminal of the primary winding Lpᵢ of a high frequency transformer Tᵢ,
- and wherein each cell balancing circuit i comprises a set of two capacitors C, namely a top capacitor Ctᵢ and a bottom capacitor Cbᵢ in a half bridge configuration,
- said half-bridge of capacitors having the upper node connected to the positive terminal of an energy storage cell Cᵢ, and the lower node connected to the negative terminal of said energy storage cell, and having the switched node connected to the other terminal of the primary winding Lpᵢ of said high frequency transformer Tᵢ,
- said high frequency transformer Tᵢ having its secondary winding Lsᵢ connected to a common two-wire AC balancing energy transfer bus, used for energy transfers between balancing circuits,
knowing that i is an integer with 1 < i ≤ N,
and where each cell balancing circuit, driven synchronously with other cell balancing circuits in the system, can transfer energy from said energy storage cell to the AC energy transfer bus or vice-versa, respectively according to whether said energy storage cell is at a voltage higher or lower than other energy storage cells.

2. System according to claim 1, wherein said cell balancing circuit further comprises current limiting resistors in series with the primary winding Lpᵢ and/or the secondary windings Lsᵢ of the high frequency transformers and/or with the switches S.

3. System according to any of claims 1 or 2, wherein said frequency is comprised between 20 kHz and 1000 kHz,

4. System according to any of claims 1 to 3, where only one of the two capacitors Ctᵢ and Cbᵢ is present.

5. System according to claims 1 to 4, where the half bridge of capacitors Ctᵢ and Cbᵢ is replaced by a half bridge of switches St2ᵢ and Sb2ᵢ, thus forming a full-bridge of switches, and optionally having a DC bypass capacitor in series with the primary winding Lpᵢ.

6. System according to any of claims 1 to 5, where the high frequency transformers Tᵢ are replaced by a single transformer with i primary windings Lpᵢ, and not having any secondary windings Lsᵢ, where the common transformer magnetic core couples all the primary windings together and thus acts as a magnetic AC balancing energy transfer bus, thus replacing the two-wire AC balancing energy transfer bus.

7. System according to any of claims 1 to 6, wherein each cell balancing circuit further comprises a low pass filter, typically comprising an inductance Lfᵢ or a resistor Rfᵢ, and a capacitor Cfᵢ, said filter being inserted between each energy storage cell Cᵢ, and its corresponding cell balancing circuit i.

8. System according to any of claims 1 to 7 wherein each of the N cell balancing circuits can be activated or deactivated, according to whether the corresponding energy cell is unbalanced or balanced.

9. System according to any of claims 1 to 8, wherein said electrical energy storage cells are capacitors or supercapacitors.

10. System according to any of claims 1 to 8 wherein said electrical energy storage cells are batteries, such as lithium ion batteries.

11. Electrical power unit for use with an electric device, **characterized in that** it comprises a system according to any of claims 1 to 10.

12. Electrical power unit according to claim 11, for use with an electric device designed to be powered by a set of secondary batteries that is inserted into said electric device and that is capable to make an electrical current flow through a first set of electric contacts connected to a second set of electric contacts, wherein said first set of electric contacts is located on said set of batteries and said second set of electric contacts is located on said electric device,
said electrical power unit being **characterized in that** it is mounted in a housing that is insertable into said electric device in lieu and place of said set of secondary batteries, wherein a first set of electric contacts connectable to said second set of electric contacts is fixed to said housing, so that said electric power unit is able to power said electric device.

13. Electrical power unit according to claim 11 or 12, **characterized in that** it is designed to replace a set of lithium ion secondary batteries.

14. Use of a system according to any of claims 1 to 10 or of an electrical power unit according to any of claims 11 to 13, to replace a battery pack in a battery-powered electric device.
